# EUROPÄISCHE PATENTSCHRIFT

(11) **EP 0 798 488 B1**
(45) Veröffentlichungstag und Bekanntmachung des Hinweises auf die Patenterteilung: **12.06.2002**
(21) Anmeldenummer: 97103829.4
(22) Anmeldetag: 07.03.1997
(51) Int. Cl.: F16F 15/00, B66B 11/00

(54) **Einrichtung zur Dämpfung der Schwingungen eines Seil-Masse-Systems**
Installation for the damping of vibrations in cable mass systems
Installation pour l'amortissement de vibrations des systèmes de câble et de masse

(30) Priorität: 29.03.1996 DE 19612570
(43) Veröffentlichungstag der Anmeldung: 01.10.1997
(73) Patentinhaber: Mannesmann Rexroth AG, 97816 Lohr am Main (DE)
(72) Erfinder: Köckemann, Albert, Dr., 97816 Lohr/Main (DE); Konertz, Jürgen, 97833 Frammersbach (DE); Klein, Georg, 97816 Lohr/Main (DE)

(56) Entgegenhaltungen:
- GB-A- 2 266 976
- US-A- 5 377 296
- PATENT ABSTRACTS OF JAPAN vol. 095, no. 003, 28. April 1995 (1995-04-28) & JP 06 336394 A (NKK CORP), 6. Dezember 1994 (1994-12-06)

## Beschreibung

Die Erfindung betrifft eine Einrichtung zur Dämpfung der Schwingungen eines Seil-Masse-Systems gemäß dem Oberbegriff des Anspruchs 1.

Von einem Aktuator angetriebene Seil-Masse-Systeme, wie z. B. Windenantriebe, die für Bühnenaufzüge eingesetzt werden, sind Feder-Masse-Systeme, bei denen das Seil als Feder wirkt. Seil-Masse-Systeme sind stark schwingungsfähige Systeme, die nur eine schwache Dämpfung besitzen. Die Eigenfrequenz eines derartigen Systems ist nicht konstant, sondern ändert sich sowohl in Abhängigkeit von der Masse der jeweils zu hebenden Last als auch in Abhängigkeit von der jeweiligen freien Länge des Seils zwischen einem Minimalwert und einem Maximalwert. Dies bedeutet, daß die Eigenfrequenz des Seil-Masse-Systems auch bei konstanter Last nicht konstant ist, sondern entsprechend der freien Länge des Seils um einen mittleren Wert schwankt. Schwingungen des Seil-Masse-Systems werden z. B. durch Beschleunigungsänderungen der Masse beim Anfahren oder Abbremsen angeregt, aber auch durch unrund laufende Antriebe, z. B. aufgrund von Druckstößen der einzelnen Motorkolben von Hydromotoren. Eine Anregung des Seil-Masse-Systems mit einer Frequenz, die gleich groß wie seine jeweilige Eigenfrequenz oder ein Vielfaches der jeweiligen Eigenfrequenz ist, führt zu einer Dauerschwingung der Last, die der Aufwärtsbewegung oder der Abwärtsbewegung der Last überlagert ist. Nicht weniger störend ist es, wenn die der Aufwärtsbewegung oder der Abwärtsbewegung der Last überlagerten Schwingungen aufgrund einer Anregung außerhalb der Eigenfrequenz des Seil-Masse-Systems in der Art einer Schwebung auf- und abklingen.

Eine Möglichkeit der Dämpfung der Schwingungen des Seil-Masse-Systems ist die Messung der Beschleunigung der Masse und die Rückführung des Beschleunigungssignals auf die den Antrieb steuernde Regeleinrichtung. Die Messung der Beschleunigung der Masse ist in der Praxis nur schwer zu realisieren, da die Anschlußleitungen eines mit der Masse verbundenen Beschleunigungsaufnehmers beim Heben und Senken der Last mitgeführt werden müssen. Die Anschlußleitungen müßten z. B. wie das die Last tragende Seil auf- und abgewickelt werden. Hierfür wäre zusätzlicher Platz und Aufwand erforderlich, wobei bei der Führung der Anschlußleitungen darauf zu achten ist, daß die ohnehin schon mechanisch beanspruchten Anschlußleitungen nicht beschädigt werden. Aus Sicherheitsgründen müßte deshalb eine Überwachung auf Kabelbruch erfolgen.

Aus der US-A-5 377 296 ist eine Einrichtung zur Dämpfung der Schwingungen eines Seil-Masse-Systems bekannt. Eine Last ist über ein Seil mit einem von der Stellgröße einer Regeleinrichtung gesteuerten Antrieb verbunden, der die Last entsprechend dem zeitlichen Verlauf einer der Regeleinrichtung zugeführten Führungsgröße anhebt oder absenkt. Der Regeleinrichtung sind weitere Eingangsgrößen zugeführt, die ein Maß für die Drehzahl eines Elektromotors und für den von ihm aufgenommenen Strom, ein Maß für die Länge des Seils in Abhängigkeit von der Position der Last und ein Maß für die Größe der Last sind. Einzelheiten der Lastmessung sind nicht gezeigt.

Der Erfindung liegt die Aufgabe zugrunde, eine Einrichtung der eingangs genannten Art zu schaffen, die mit einfachen Mitteln eine Dämpfung der Schwingungen des Seil-Masse-Systems ermöglicht.

Diese Aufgabe wird durch die kennzeichnenden Merkmale des Anspruchs 1 gelöst. Die Erfindung macht von der Überlegung Gebrauch, daß die von der Last verursachte Kraft im Kraftfluß eines Seil-Masse-Systems praktisch den gleichen zeitlichen Verlauf und die gleiche Phasenlage wie die Beschleunigung der Masse aufweist. Da die Kraft im Kraftfluß nicht nur innerhalb des Seil-Masse-Systems auftritt, sondern auch als Reaktionskraft an Stellen, an denen der Antrieb befestigt ist, oder an denen Umlenkrollen befestigt sind, über die das Seil geführt ist, ist es möglich, den Kraftgeber ortsfest anzuordnen. Die Ausgestaltung des Kraftgebers als Befestigungselement für die Verlagerung des Antriebs ermöglicht eine Kraftmessung, wenn keine Seilumlenkung vorgesehen ist oder wenn eine auf mehrere Seile verteilte Last von einem Aktuator angetrieben wird. Die Ausgestaltung des Kraftgebers als Befestigungselement für die Verlagerung einer Seilumlenkrolle erlaubt eine einfache Montage bei Seil-Masse-Systemen mit einer Umlenkung des Seils über mindestens eine Seilumlenkrolle. Dies gilt sowohl für die Verlagerung ortsfest angeordneter Seilumlenkrollen als auch für die Verlagerung von beweglich angeordneten Seilumlenkrollen, z. B. eines Spulapparates.

Vorteilhafte Ausgestaltungen der Erfindung sind in den Unteransprüchen gekennzeichnet. Wird nur der Wechselanteil der von der Last verursachten Kraft auf die Regeleinrichtung zurückgeführt, verbessert sich das Regelverhalten, insbesondere die stationäre Regelgenauigkeit. Eine statische Kraft, z. B. die Gewichtskraft der Last, die im Stillstand auf den Antrieb wirkt, macht sich dann nicht mehr als Gleichanteil der dem Antrieb zugeführten Stellgröße bemerkbar. Ein Hochpaßfilter, das zwischen Kraftgeber und Regeleinrichtung angeordnet ist, eliminiert den Gleichanteil. Die Eckfrequenz des Hochpaßfilters ist dabei kleiner gewählt als die kleinste Eigenfrequenz des Seil-Masse-Systems. Eine einfache Realisierung eines Hochpaßfilters erster Ordnung ist die Parallelanordnung eines Proportionalgliedes und eines Verzögerungsgliedes erster Ordnung mit gleichen Verstärkungsfaktoren, wobei das Ausgangssignal der Parallelanordnung die Differenz zwischen dem Ausgangssignal des Proportionalgliedes und dem Ausgangssignal des Verzögerungsgliedes erster Ordnung ist. Die Verwendung eines Kraftmeßbolzens oder eines Kraftmeßflansches als Befestigungselement ermöglicht eine einfache Befestigung der Verlagerungen der Seilumlenkrolle oder des Antriebs an der Deckenkonstruktion bzw. am Fundament.

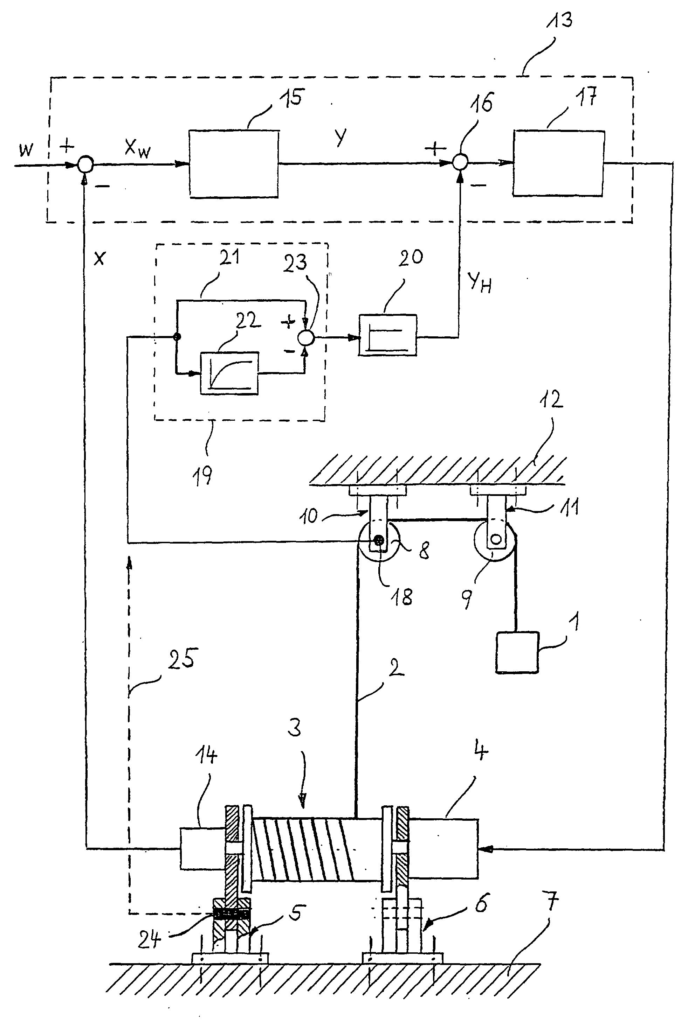

Ein Ausführungsbeispiel der Erfindung ist anhand der Zeichnung beschrieben. Die Zeichnung zeigt eine Einrichtung zur Dämpfung der Schwingungen eines Seil-Masse-Systems in schematischer Darstellung am Beispiel eines Bühnenaufzugs der Obermaschinerie eines Theaters.

Eine Last 1 ist an einem Seil 2 gehalten, das auf eine Winde 3 gewickelt ist. Ein als Aktuator dienender Motor 4, z. B. ein Hydromotor oder ein Elektromotor, treibt die Winde 3 an. Die Winde 3 und der Motor 4 bilden den Antrieb des Seil-Masse-Systems. Die Winde 3 ist über zwei Verlagerungskonstruktionen 5 und 6 an einem Fundament 7 befestigt. Das Seil 2 ist über zwei Seilumlenkrollen 8 und 9 geführt, die über je eine Verlagerungskonstruktion 10 bzw. 11 an einer Deckenkonstruktion 12 befestigt sind. Eine elektrische Regeleinrichtung 13 steuert im Fall einer Lageregelung die Winkelstellung oder im Fall einer Geschwindigkeitsregelung die Geschwindigkeit der mit dem Motor 4 verbundenen Winde 3 entsprechend einer Führungsgröße, die der Regeleinrichtung 13 als Sollwert w zugeführt ist. Das Ausgangssignal eines Meßumformers 14 ist der Regeleinrichtung 13 als Istwert x zugeführt. Das Ausgangssignal des Meßumformers 14 ist im Fall einer Lageregelung ein Maß für die Winkelstellung bzw. im Fall einer Geschwindigkeitsregelung ein Maß für die Geschwindigkeit der Winde 3. Die Regeleinrichtung 13 bildet aus dem Sollwert w und dem Istwert x die Regelabweichung x_{w}. Sie ist dem Eingang eines Reglers 15 zugeführt, der aus ihr in an sich bekannter Weise eine Stellgröße y berechnet. Die Stellgröße y ist über ein Verknüpfungsglied 16 einem Leistungsverstärker 17 zugeführt, der den Motor 4 ansteuert. Bei Bedarf kann der Leistungsverstärker 17 als unterlagerter Regelkreis ausgebildet werden.

Zwischen der Rolle 8 und der Verlagerungskonstruktion 10 ist ein Kraftmeßbolzen 18 angeordnet, der als kraftübertragendes Element für die Rolle 8 dient. Die Kraft des Kraftflusses des aus der Last 1 und dem Seil 2 bestehenden Seil-Masse-Systems wirkt auf den Kraftmeßbolzen 18. Der Wechselanteil dieser Kraft ist ein Maß für den Wechselanteil der Beschleunigung der Masse 1. Der Kraftmeßbolzen 18 formt die auf ihn wirkende Kraft in ein elektrisches Signal um. Dieses Signal ist einem Hochpaßfilter 19 zugeführt. Das Hochpaßfilter 19 leitet nur den Wechselanteil des Ausgangssignals des Kraftmeßbolzens 18 weiter. Das Ausgangssignal des Hochpaßfilters 19 ist dem Verknüpfungsglied 16 der Regeleinrichtung 13 über ein Proportionalglied 20 zugeführt. Das Proportionalglied 20 ermöglicht eine Bewertung des Ausgangssignals des Hochpaßfilters 19. In dem Verknüpfungsglied 16 erfolgt eine Gegenkopplung des mit y_{H} bezeichneten Ausgangssignals des Proportionalgliedes 20. Bei sehr langsamen Kraftänderungen oder bei einer zeitlich konstanten Kraft wird das Ausgangssignal y_{H} des Proportionalgliedes 20 zu Null. Das Hochpaßfilter 19 ist durch die Parallelanordnung einer Signalleitung 21, die einem Proportionalglied mit dem Verstärkungsfaktor 1 entspricht, und eines Verzögerungsgliedes erster Ordnung 22 mit demselben Verstärkungsfaktor aufgebaut. Ein Verknüpfungsglied 23 bildet die Differenz aus dem der Leitungsverbindung 21 zugeführten Signal und dem Ausgangssignal des Verzögerungsgliedes erster Ordnung 22.

In der Verlagerungskonstruktion 5 der Winde 3 ist ein Kraftmeßbolzen 24 angeordnet. Über die Winde 3 wirkt die Kraft des Kraftflusses in dem Seil-Masse-System auch auf den Kraftmeßbolzen 24. Es ist daher möglich, dem Hochpaßfilter 19 anstelle des Ausgangssignals des Kraftmeßbolzens 18 das Ausgangssignal des Kraftmeßbolzens 24 zuzuführen, um Schwingungen des Seil-Masse-Systems zu dämpfen. Diese Signalverbindung ist durch eine gestrichelte Linie 25 angedeutet.

Anstelle eines Kraftmeßbolzens kann in einer Verlagerungskonstruktion des Antriebs oder einer Seilrolle ein Kraftmeßflansch vorgesehen werden.

Die erfindungsgemäße Einrichtung zur Dämpfung der Schwingungen eines Seil-Masse-Systems ist nicht auf die als Ausführungsbeispiel beschriebenen Bühnenaufzüge beschränkt. Die Einrichtung ist in gleichem Maße für alle Anordnungen geeignet, bei denen eine Last mit einem Seil gehoben oder gesenkt wird. Hierzu gehören Hebezeuge, wie Krane, und Personenaufzüge sowie Lastenaufzüge. Der Seilantrieb muß nicht mit einem rotatorischen Antrieb über eine Winde erfolgen, sondern kann auch über einen Linearantrieb erfolgen.

## Patentansprüche

1. Einrichtung zur Dämpfung der Schwingungen eines Seil-Masse-Systems (2, 1), insbesondere eines Seilantriebs für einen Bühnenaufzug, bei dem ein von der Stellgröße (Y) einer Regeleinrichtung (13) gesteuerter Antrieb (3, 4) eine über ein Seil (2) mit dem Antrieb verbundene Last (1) entsprechend dem zeitlichen Verlauf einer der Regeleinrichtung zugeführten Führungsgröße (W) anhebt oder absenkt, wobei der Regeleinrichtung das Ausgangssignal eines im Kraftfluß des Seil-Masse-Systems angeordneten Kraftgebers zugeführt ist, **dadurch gekennzeichnet, daß** der Kraftgeber (18; 24) als Befestigungselement für die Verlagerung einer Seilumlenkrolle (8) oder als Befestigungselement für die Verlagerung des Antriebs (3, 4) ausgebildet ist.

2. Einrichtung nach Anspruch 1, **dadurch gekennzeichnet, daß** nur der Wechselanteil des Ausgangssignals des im Kraftfluß des Seil-Masse-Systems angeordneten Kraftgebers (18; 24) auf die Regeleinrichtung (13) zurückgeführt ist.

3. Einrichtung nach Anspruch 2, **dadurch gekennzeichnet, daß** das Ausgangssignal des Kraftgebers (18; 24) über ein Hochpaßfilter (19) geführt ist, dessen Eckfrequenz kleiner als die kleinste Eigenfrequenz des Seil-Masse-Systems ist.

4. Einrichtung nach Anspruch 3, **dadurch gekennzeichnet, daß** das Hochpaßfilter (19) als Parallelanordnung eines Proportionalgliedes (21) und eines Verzögerungsgliedes erster Ordnung (22) mit gleichem Verstärkungsfaktor ausgebildet ist, wobei das Ausgangssignal der Parallelanordnung die Differenz zwischen dem Ausgangssignal der Proportionalgliedes (21) und dem Ausgangssignal des Verzögerungsgliedes erster Ordnung (22) ist.

5. Einrichtung nach einem der vorhergehenden Ansprüche, **dadurch gekennzeichnet, daß** der Kraftgeber ein Kraftmeßbolzen oder ein Kraftmeßflansch ist.

## Claims

1. A device for the damping of oscillations of a cable-mass system (2, 1), in particular a cable drive for a stage hoist, in which a drive (3, 4) controlled by a command signal (Y) from a control device (13) raises or lowers a load (1) connected to the drive by means of a cable (2) according to the variation over time of a reference input signal (W) fed to the control device, whereby the output signal of a force sensor arranged in the force flow of the cable-mass system is fed to the control device, **characterized in that** the force sensor (18; 24) is developed as a fastening element for the bearing assembly of a cable pulley (8) or as a fastening element for the mount of the drive (3, 4).

2. A device according to Claim 1, **characterized in that** only the varying component of the output signal of the force sensor (18; 24) arranged in the force flow of the cable-mass system is fed to the control device (13).

3. A device according to Claim 2, **characterized in that** the output signal of the force sensor (18;24) is fed through a high pass filter (19) the base frequency of which is smaller than the smallest natural frequency of the cable-mass system.

4. A device according to Claim 3, **characterized in that** the high pass filter (19) is developed as a parallel arrangement of a proportional element (21) and a first-order time-delay element (22) with the same gain factor, whereby the output signal of the parallel arrangement is the difference between the output signal of the proportional element (21) and the output signal of the first-order time-delay element (22).

5. A device according to any of the preceding claims, **characterized in that** the force sensor is a force sensing bolt or a force sensing flange.

## Revendications

1. Un dispositif dédié à l'amortissement des oscillations d'un système comportant un câble et une masse (2, 1), en particulier d'un entraînement par câble pour un treuil de scène de théâtre, pour lequel un entraînement (3, 4) commandé par le paramètre (Y) de commande, lequel est généré par un dispositif (13) de régulation, lève ou baisse une charge (1), laquelle est reliée à l'entraînement par un câble (2), en fonction de l'évolution dans le temps d'un paramètre (W) variable, lequel est amené vers le dispositif de régulation, cependant que le signal de sortie d'un capteur de force, lequel est disposé dans le flux des forces du système pendulaire, est amené vers le dispositif de régulation, **caractérisé en ce que** le capteur (18 ; 24) de force est conçu sous forme d'élément de fixation pour le montage d'une poulie (8) ou sous forme d'élément de fixation pour le montage de l'entraînement (3, 4).

2. Un dispositif conforme à la revendication n° 1, **caractérisé en ce que** seulement la partie variable du signal de sortie du capteur (18 ; 24) de force, lequel est disposé dans le flux des forces du système pendulaire, est ramenée vers le dispositif (13) de régulation.

3. Un dispositif conforme à la revendication n° 2, **caractérisé en ce que** le signal de sortie du capteur (18 ; 24) de force est amené à traverser un filtre (19) à bande de fréquence élevée, dont la fréquence de coupure est inférieure à la plus petite des fréquences propres du système pendulaire.

4. Un dispositif conforme à la revendication n° 3, **caractérisé en ce que** le filtre (19) à bande de fréquence élevée est formé par la disposition en parallèle d'un élément (21) proportionnel et d'un élément (22) de retardement de premier ordre, lequel est doté du même coefficient d'amplification, cependant que le signal de sortie de la disposition en parallèle est formé par la différence entre le signal de sortie de l'élément (21) proportionnel et le signal de sortie de l'élément (22) de retardement de premier ordre.

5. Un dispositif conforme à une des revendications précédentes, **caractérisé en ce que** le capteur de force est conçu sous forme de goujon de mesure de la force ou sous forme de bride de mesure de la force.
